# EUROPÄISCHE PATENTSCHRIFT

(11) **EP 2 017 134 B1**
(45) Veröffentlichungstag und Bekanntmachung des Hinweises auf die Patenterteilung: **29.09.2010**
(21) Anmeldenummer: 08012812.7
(22) Anmeldetag: 16.07.2008
(51) Int. Cl.: B60R 13/04, B62D 25/00, B60J 5/04

(54) **Vorrichtung zum Ausgleichen von Absätzen an einer Karosserie eines Kraftfahrzeugs**
Device to fill-in stepped parts in a body of a motor vehicle
Dispositif de compensations pour des parties étagées de la carosserie d'un véhicule automobile

(30) Priorität: 18.07.2007 DE 102007033421
(43) Veröffentlichungstag der Anmeldung: 21.01.2009
(73) Patentinhaber: Audi AG, 85045 Ingolstadt (DE)
(72) Erfinder: Martin, Frank, 74248 Ellhofen (DE); Pietsch, Axel, 74074 Heilbronn (DE)
(74) Vertreter: Patzelt, Heike Anna Maria

(56) Entgegenhaltungen:
- EP-A- 1 323 587
- WO-A-2005/061252
- DE-A1-102004 046 916
- DE-A1-102005 017 744

## Beschreibung

Die Erfindung betrifft eine Vorrichtung zum Ausgleichen von Absätzen an einer Karosserie eines Kraftfahrzeugs nach der im Oberbegriff von Anspruch 1 näher definierten Art.

Dokument EP1 323 587 beschreibt eine solche Vorrichtung.

Bei der Konstruktion von Cabriolets ist es meist üblich, die für ein Coupé oder eine Limousine eingesetzte Karosserie auch für das Cabriolet zu verwenden, da sich hierdurch Kosten in enormer Höhe einsparen lassen. Durch die zusätzlichen Bauteile, die bei einer Karosserie eines Cabriolets erforderlich sind, wie beispielsweise der Verdeckkastendeckel, ist jedoch eine gewisse Änderung der Grundform der Coupe-Karosserie erforderlich. Dies hat manchmal zur Folge, dass in bestimmten Bereichen die Karosserieteile nicht zueinander passen und Absätze in der Karosserie entstehen.

Eine derartige Problematik kann sich auch in anderen Bereichen der Karosserie bei Kraftfahrzeugen mit beliebeigen Karosserieformen ergeben, beispielsweise wenn Anbauteile wie Lufthutzen oder größere Spoiler mit der Karosserie verbunden werden sollen.

Solche Absätze innerhalb der Karosserie werden gemäß einem allgemeinen Stand der Technik mit geeigneten Verkleidungen ausgeglichen, die vorzugsweise in Wagenfarbe lackiert werden, um das Vorhandensein derselben so gut wie möglich zu kaschieren. Meist muss ein recht großer Aufwand betrieben werden, um die Verkleidung möglichst unauffällig auszuführen.

Es ist Aufgabe der vorliegenden Erfindung, eine Vorrichtung zum Ausgleichen von Absätzen an einer Karosserie eines Kraftfahrzeugs zu schaffen, welche mit möglichst geringem Aufwand eine optisch möglichst wenig auffallende Möglichkeit zum Ausgleichen dieser Absätze bietet.

Erfindungsgemäß wird diese Aufgabe durch die in Anspruch 1 genannten Merkmale gelöst.

Durch die zweiteilige Ausführung der erfindungsgemäßen Vorrichtung mit dem Trägerteil und dem Verkleidungsteil wird verhindert, dass die Vorrichtung massiv ausgeführt werden muss, wodurch sich ansonsten an der Außenseite derselben Abzeichnungen ergeben würden und diese nicht für hochwertige Anwendungen geeignet wäre. Hierbei übernimmt das Trägerteil einen Teil des erforderlichen Höhenausgleichs. Dadurch lässt sich eine kontinuierliche Wandstärke des Verkleidungsteils ohne das Erfordernis von Verstärkungsrippen oder dergleichen realisieren, was zu einer sehr homogenen äußeren Oberfläche führt.

Die Rasteinrichtung zur Anbringung des Verkleidungsteils an dem Trägerteil ermöglicht dabei eine sehr einfache Montage und stellt eine sichere Befestigung des Verkleidungsteils an dem Trägerteil und somit an der Karosserie sicher.

Wenn in einer vorteilhaften Weiterbildung der Erfindung vorgesehen ist, dass die Rasteinrichtung jeweilige Vorsprünge an dem Trägerteil und an dem Verkleidungsteil aufweist, die im angebrachten Zustand des Verkleidungsteils an dem Trägerteil derart übereinander angeordnet sind, dass sie ein Abheben des Verkleidungsteils von dem Trägerteil verhindern, so wird ein Abheben des Verkleidungsteils an dem Trägerteil auch dann verhindert, wenn eine äußere Kraft auf das Verkleidungsteil einwirkt. Dies kann beispielsweise der Fall sein, wenn sich die Vorrichtung an einem beweglichen Karosserieteil, wie beispielsweise einer Tür, befindet und ein Benutzer Kraft auf das Verkleidungsteil aufbringt, um die Tür zu bewegen.

Erfindungsgemäß braucht die Rasteinrichtung nur über einen Teil der Länge des Verkleidungsteils vorgesehen sein, wobei vorgesehen sein kann, dass das Verkleidungsteil über wenigstens einen Teil desjenigen Teils seiner Länge, an dem die Rasteinrichtung nicht vorgesehen ist, mit dem zweiten Karosserieteil verklebt ist.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Es zeigt:
- Fig. 1: eine sehr schematische Darstellung der erfindungsgemäßen Vorrichtung an einem Teil einer Karosserie eines Kraftfahrzeugs;
- Fig. 2: eine Ansicht einer Kraftfahrzeugtür von innen, an der die erfindungsge- mäße Vorrichtung angebracht ist;
- Fig. 3: eine perspektivische Ansicht der erfindungsgemäßen Vorrichtung mit ei- nem teilweise weggeschnittenen Verkleidungsteil;
- Fig. 4: eine Ansicht der erfindungsgemäßen Vorrichtung in einem ersten Monta- geschritt;
- Fig. 5: die erfindungsgemäße Vorrichtung in einem zweiten Montageschritt;
- Fig. 6: die Vorrichtung aus Fig. 4 und Fig. 5 im fertig montierten Zustand;
- Fig. 7: einen Schnitt durch die erfindungsgemäße Vorrichtung, und
- Fig. 8: einen Schnitt durch die erfindungsgemäße Vorrichtung.

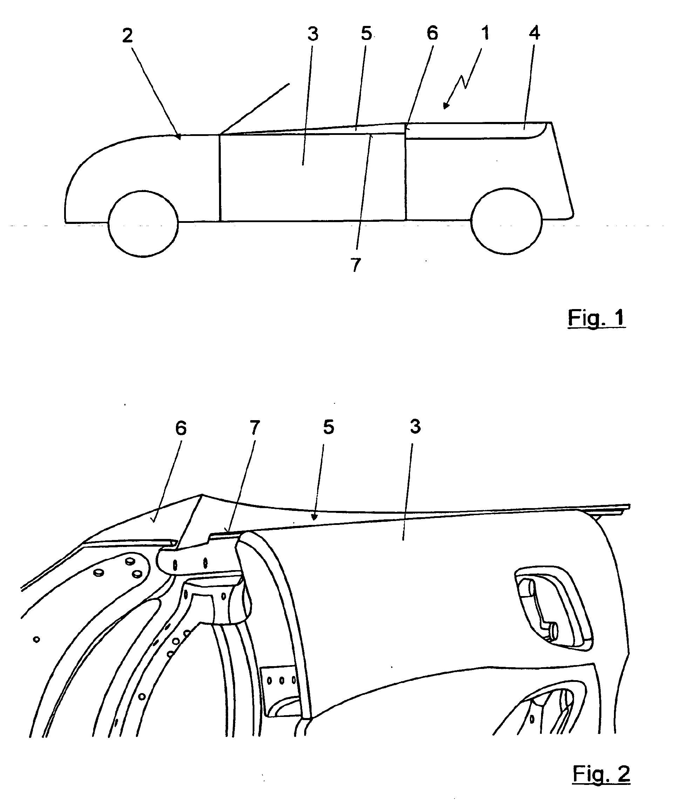

Fig. 1 zeigt ein Kraftfahrzeug 1, das im vorliegenden Fall als Cabriolet ausgeführt ist. Das Kraftfahrzeug 1 weist eine Karosserie 2 auf, die aus mehreren Karosserieteilen besteht. Im vorliegenden Fall wird auf zwei der Karosserieteile der Karosserie 2 näher eingegangen, nämlich auf eine Seitentür 3 und einen Verdeckkastendeckel 4, in dem ein nicht dargestelltes Verdeck des Kraftfahrzeugs 1 im geöffneten Zustand desselben untergebracht ist. Bei der Seitentür 3 handelt es sich im vorliegenden Fall um die Fahrertür, es könnte sich jedoch auch um die Beifahrertür des Kraftfahrzeugs 1 handeln.

Zwischen dem Verdeckkastendeckel 4 und der Seitentür 3 weist die Karosserie 2 im vorliegenden Fall einen Absatz auf, der dadurch entsteht, dass die Karosserie 2 von einem Coupé-Fahrzeug übernommen und mit den Merkmalen des Cabriolet-Fahrzeugs, im konkreten Fall mit dem Verdeckkastendeckel 4, ausgestattet wurde. Die Seitentür 3 kann insbesondere unverändert von dem Coupé übernommen werden. Dieser Absatz wird mittels einer Vorrichtung 5, welche nachfolgend näher beschrieben wird, ausgeglichen. Die Vorrichtung 5 weist eine an das erste Karosserieteil, im vorliegenden Fall an den Verdeckkastendeckel 4, angepasste Seite 6 und eine an dem zweiten Karosserieteil, nämlich der Seitentür 3, angebrachte Seite 7 auf. Mit anderen Worten, die Vorrichtung 5 ist an der Seitentür 3 angebracht und so ausgebildet, dass sie einen möglichst glatten Übergang zu dem Verdeckkastendeckel 4 herstellt. Hierzu weist die Vorrichtung 5 eine entsprechende Schräge bzw. Neigung auf.

In Fig. 2 ist die Seitentür 3 von innen dargestellt und es ist erkennbar, dass die Vorrichtung 5 an der äußeren Blechkonstruktion der Seitentür 3, also außerhalb einer nicht dargestellten Fensterscheibe, angebracht ist und mit den Verkleidungsteilen an der Innenseite der Seitentür 3 keine Berührungspunkte aufweist. Die Vorrichtung 5 kann daher auch als Brüstungsleiste bezeichnet werden.

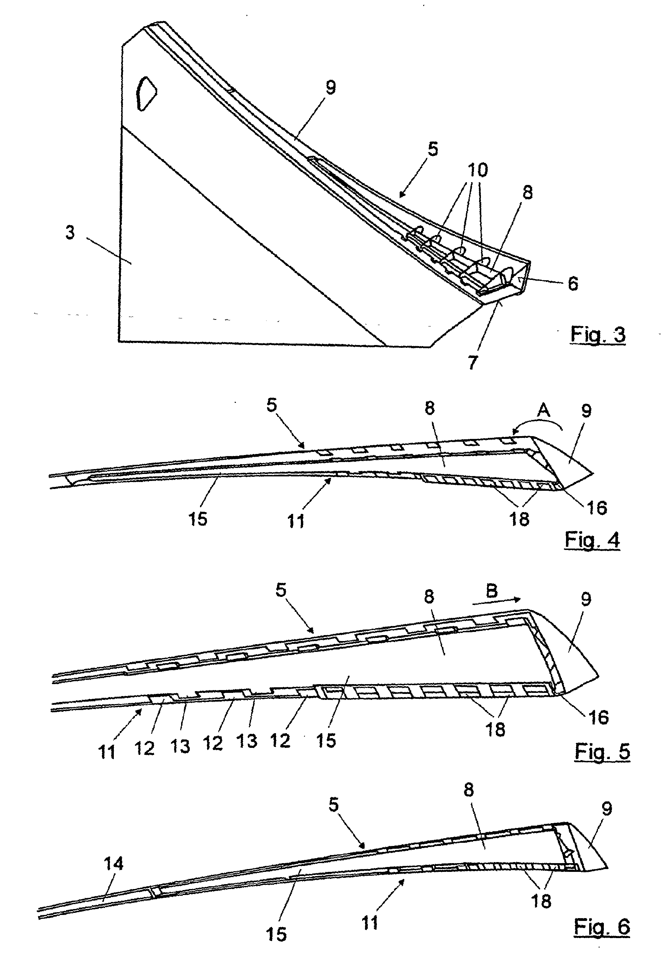

Die Vorrichtung 5 weist, wie in Fig. 3 zu erkennen ist, ein an der Seitentür 3 angebrachtes Trägerteil 8 und ein mit dem Trägerteil 8 verbundenes Verkleidungsteil 9 auf, welches bei der Darstellung gemäß Fig. 3 teilweise weggeschnitten ist. In Fig. 3 ist erkennbar, dass das Trägerteil 8 mehrere Rippen 10 aufweist, welche sich in Richtung des Verkleidungsteils 9 erstrecken und zur Versteifung des Trägerteils 8 dienen sowie für einen Unterbau des Verkleidungsteils 9 sorgen. Im vorliegenden Fall bestehen sowohl das Trägerteil 8 als auch das Verkleidungsteil 9 aus Kunststoff.

Aus den Figuren 4, 5 und 6, welche aufeinanderfolgende Montageschritte bei der Anbringung des Verkleidungsteils 9 an dem Trägerteil 8 zeigen, ist erkennbar, dass das Verkleidungsteil 9 mittels einer Rasteinrichtung 11 an dem Trägerteil 8 angebracht bzw. mit demselben verbunden ist und damit über das Trägerteil 8 an der Seitentür 3 hält. Die Rasteinrichtung 11 weist jeweilige Vorsprünge 12 an dem Trägerteil 8 und Vorsprünge 13 an dem Verkleidungsteil 9 auf, die im angebrachten Zustand des Verkleidungsteils 9 an dem Trägerteil 8 wie in Fig. 6 erkennbar ist derart übereinander angeordnet sind, dass sie ein Abheben des Verkleidungsteils 9 von dem Trägerteil 8 verhindern. Wie später noch deutlich wird, sind im nicht vollständig angebrachten Zustand der Vorrichtung 5 die Vorsprünge 12 des Trägerteils 8 gegenüber den Vorsprüngen 13 des Verkleidungsteils 9 versetzt, sodass die Montierbarkeit dieser beiden Bauteile gewährleistet ist. Aus Fig. 4 geht hervor, dass die Rasteinrichtung 11 nur über einen Teil der Länge des Verkleidungsteils 9 vorgesehen ist, und dass das Verkleidungsteil 9 über wenigstens einen Teil desjenigen Teils seiner Länge, an dem die Rasteinrichtung 11 nicht vorgesehen ist, mit der Seitentür 3 verklebt ist. Hierzu ist an dem Verkleidungsteil 9 ein Klebestreifen 14 vorgesehen, mit dem das Verkleidungsteil 9 an der Seitentür 3 angeklebt wird. Auch das Trägerteil 8 ist mittels eines Klebestreifens 15 mit der Seitentür 3 verklebt, um die Verbindung zwischen dem Trägerteil 8 und der Seitentür 3 auf adäquate Art und Weise sicherzustellen.

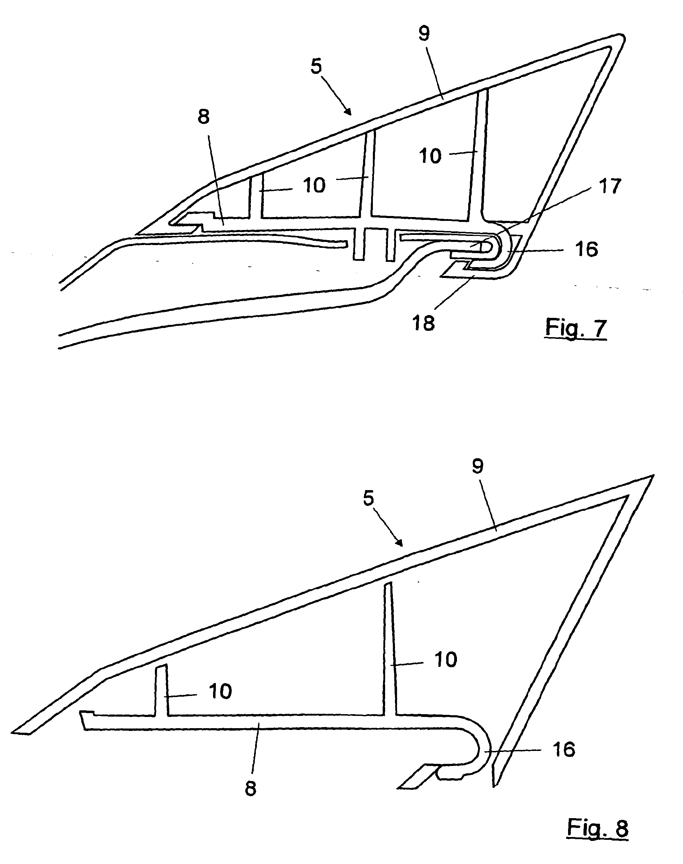

Zusätzlich zu der Befestigung des Trägerteils 8 mittels des Klebestreifens 15 weist das Trägerteil 8 über einen Teil seiner Länge mehrere U-förmige Bügel 16 auf, die eine Kante 17 der Seitentür 3 umgreifen. Auch das Verkleidungsteil 9 weist über einen Teil seiner Länge mehrere U-förmige Bügel 18 auf, die die Kante 17 der Seitentür 3 umgreifen. Die U-förmigen Bügel 16 und 18 sind in den Figuren 7 und 8, die zwei verschiedene Schnitte durch die Vorrichtung 5 in ihrem an der Seitentür 3 angebrachten Zustand zeigen, deutlicher erkennbar. Dabei ist neben den U-förmigen Bügeln 16 und 18 des Trägerteils 8 sowie des Verkleidungsteils 9 auch erkennbar, dass das Verkleidungsteil 9 eine im wesentlichen gleichmäßige Wandstärke aufweist. Hierbei stellen die U-förmigen Bügel 16 und 18 eine formschlüssige Verbindung zwischen der Vorrichtung 5 und der Seitentür 3 und damit im vorliegenden Fall eine Fixierung der Vorrichtung 5 in senkrechter Richtung her.

Fig. 4 zeigt den Zustand, in dem das Trägerteil 8 mit seinen U-förmigen Bügeln 16 an der Kante 17 der Seitentür 3 eingehängt und mittels des Klebestreifens 15 an der nicht dargestellten Seitentür 3 befestigt wurde. Auch das Verkleidungsteil 9 ist mit den U-förmigen Bügeln 18 an der Kante 17 der Seitentür 3 eingehängt, befindet sich jedoch noch nicht in seiner Endposition. Anschließend erfolgt eine Drehung des Verkleidungsteils 9 um den Pfeil "A" aus Fig. 4. Nach Abschluss dieser Drehung liegt das Verkleidungsteil 9 ebenfalls an der oberen Fläche der Seitentür 3 an und wird dann in Richtung des Pfeils "B" aus Fig. 5 in Längsrichtung des Kraftfahrzeugs 1 verschoben, um seine in Fig. 6 dargestellte endgültige Position zu erreichen. Die U-förmigen Bügel 18 des Verkleidungsteils 9 sind im montierten Zustand, also in dem in Fig. 6 dargestellten Zustand, versetzt zu den U-förmigen Bügeln 16 des Trägerteils 8 angeordnet.

In nicht dargestellter Art und Weise könnte zwischen dem Trägerteil 8 und dem Verkleidungsteil 9 ein Schaum angeordnet sein, um höhere Flächenpressungen auf das Verkleidungsteil 9 aufnehmen zu können.

Neben der dargestellten Anwendung der Vorrichtung 5 als äußere Brüstungsleiste an der Seitentür 3 des Kraftfahrzeugs 1 könnte diese auch als untere Abschlussleiste einer Kraftfahrzeugtür ausgebildet sein oder bei einer Lufthutze, einem Spoiler oder dergleichen eingesetzt werden.

## Patentansprüche

1. Vorrichtung zum Ausgleichen von Absätzen an einer Karosserie eines Kraftfahrzeugs, welche eine an ein erstes Karosserieteil angepasste Seite und eine an einem zweiten Karosserieteil angebrachte Seite aufweist, mit einem Trägerteil (8), welches an dem zweiten Karosserieteil (3) angebracht ist, und ein Verkleidungsteil (9), welches mittels einer Rasteinrichtung (11) an dem Trägerteil (8) anbringbar ist, wobei die Rasteinrichtung (11) nur über einen Teil der Länge des Verkleidungsteils (9) vorgesehen ist, **dadurch gekennzeichnet, dass** das Verkleidungsteil (9) über wenigstens einen Teil desjenigen Teils seiner Länge, an dem die Rasteinrichtung (11) nicht vorgesehen ist, mit dem zweiten Karosserieteil (3) verklebt ist.

2. Vorrichtung nach Anspruch 1, **dadurch gekennzeichnet, dass** die Rasteinrichtung (11) jeweilige Vorsprünge (12,13) an dem Trägerteil (8) und an dem Verkleidungsteil (9) aufweist, die im angebrachten Zustand des Verkleidungsteils (9) an dem Trägerteil (8) derart übereinander angeordnet sind, dass sie ein Abheben des Verkleidungsteils (9) von dem Trägerteil (8) verhindern.

3. Vorrichtung nach Anspruch 1 oder 2, **dadurch gekennzeichnet, dass** das Trägerteil (8) mit dem zweiten Karosserieteil (3) verklebt ist.

4. Vorrichtung nach einem der Ansprüche 1 bis 3, **dadurch gekennzeichnet, dass** das Trägerteil (8) über einen Teil seiner Länge mehrere U-förmige Bügel (16) aufweist, die eine Kante (17) des zweiten Karosserieteils (3) umgreifen.

5. Vorrichtung nach einem der Ansprüche 1 bis 4, **dadurch gekennzeichnet, dass** das Verkleidungsteil (9) über einen Teil seiner Länge mehrere U-förmige Bügel (18) aufweist, die eine Kante (17) des zweiten Karosserieteils (3) umgreifen.

6. Vorrichtung nach den Ansprüchen 4 und 5, **dadurch gekennzeichnet, dass** die U-förmigen Bügel (18) des Verkleidungsteils (9) im montierten Zustand versetzt zu den U-förmigen Bügeln (16) des Trägerteils (8) angeordnet sind.

7. Vorrichtung nach einem der Ansprüche 1 bis 6, **dadurch gekennzeichnet, dass** das Trägerteil (8) Rippen (10) aufweist, welche sich in Richtung des Verkleidungsteils (9) erstrecken.

8. Vorrichtung nach einem der Ansprüche 1 bis 7, **dadurch gekennzeichnet, dass** das Verkleidungsteil (9) eine im Wesentlichen gleichmäßige Wandstärke aufweist.

## Claims

1. Device for filling in stepped portions on a body of a motor vehicle, which device has a side matched to a first body part and a side attached to a second body part, having a support part (8) which is attached to the second body part (3), and a lining part (9) which can be attached by means of a latching device (11) to the support part (8), with the latching device (11) being provided only over a part of the length of the lining part (9), **characterized in that** the lining part (9) is adhesively bonded, over at least a part of that part of its length in which the latching device (11) is not provided, to the second body part (3).

2. Device according to Claim 1, **characterized in that** the latching device (11) has respective projections (12, 13) on the support part (8) and on the lining part (9), which projections (12, 13), in the state in which the lining part (9) is attached to the support part (8), are arranged one above the other so as to prevent the lining part (9) from being lifted from the support part (8).

3. Device according to Claim 1 or 2, **characterized in that** the support part (8) is adhesively bonded to the second body part (3).

4. Device according to one of Claims 1 to 3, **characterized in that** the support part (8) has, over a part of its length, a plurality of U-shaped brackets (16) which engage around an edge (17) of the second body part (3).

5. Device according to one of Claims 1 to 4, **characterized in that** the lining part (9) has, over a part of its length, a plurality of U-shaped brackets (18) which engage around an edge (17) of the second body part (3).

6. Device according to Claims 4 and 5, **characterized in that** the U-shaped brackets (18) of the lining part (9) are arranged offset with respect to the U-shaped brackets (16) of the support part (8) in the assembled state.

7. Device according to one of Claims 1 to 6, **characterized in that** the support part (8) has ribs (10) which extend in the direction of the lining part (9).

8. Device according to one of Claims 1 to 7, **characterized in that** the lining part (9) has a substantially uniform wall thickness.

## Revendications

1. Dispositif de compensation de parties étagées sur une carrosserie d'un véhicule automobile, qui présente un côté adapté à une première partie de la carrosserie et un côté monté sur une deuxième partie de la carrosserie, avec une partie de support (8) qui est montée sur la deuxième partie de la carrosserie (3), et une partie d'habillage (9) qui peut être amenée au moyen d'un dispositif d'encliquetage (11) sur la partie de support (8), le dispositif d'encliquetage (11) n'étant prévu que sur une partie de la longueur de la partie d'habillage (9), **caractérisé en ce que** la partie d'habillage (9) par le biais d'au moins une partie de la partie de sa longueur sur laquelle n'est pas prévu le dispositif d'encliquetage (11), est collée à la deuxième partie de la carrosserie (3).

2. Dispositif selon la revendication 1, **caractérisé en ce que** le dispositif d'encliquetage (11) présente à chaque fois des saillies (12, 13) sur la partie de support (8) et sur la partie d'habillage (9), lesquelles sont disposées l'une au-dessus de l'autre dans l'état monté de la partie d'habillage (9) sur la partie de support (8) de telle sorte qu'elles empêchent la partie d'habillage (9) de se soulever de la partie de support (8).

3. Dispositif selon la revendication 1 ou 2, **caractérisé en ce que** la partie de support (8) est collée à la deuxième partie de la carrosserie (3).

4. Dispositif selon l'une quelconque des revendications 1 à 3, **caractérisé en ce que** la partie de support (8) présente sur une partie de sa longueur plusieurs étriers en forme de U (16) qui viennent en prise autour d'une arête (17) de la deuxième partie de la carrosserie (3).

5. Dispositif selon l'une quelconque des revendications 1 à 4, **caractérisé en ce que** la partie d'habillage (9) présente, sur une partie de sa longueur, plusieurs étriers en forme de U (18) qui viennent en prise autour d'une arête (17) de la deuxième partie de la carrosserie (3).

6. Dispositif selon les revendications 4 et 5, **caractérisé en ce que** les étriers en forme de U (18) de la partie d'habillage (9) sont disposés dans l'état monté de manière décalée par rapport aux étriers en forme de U (16) de la partie de support (8).

7. Dispositif selon l'une quelconque des revendications 1 à 6, **caractérisé en ce que** la partie de support (8) présente des nervures (10), qui s'étendent dans la direction de la partie d'habillage (9).

8. Dispositif selon l'une quelconque des revendications 1 à 7, **caractérisé en ce que** la partie d'habillage (9) présente une épaisseur de paroi sensiblement uniforme.
